# EUROPEAN PATENT APPLICATION

(11) **EP 3 182 148 A1**
(43) Date of publication of application: **21.06.2017**
(21) Application number: 16204838.3
(22) Date of filing: 16.12.2016
(51) Int. Cl.: G01S 1/10, G01S 1/04, G01S 1/42

(54) **DIRECTIONAL BEACON**

(30) Priority: 18.12.2015 IT UB20159719
(71) Applicant: C-LED S.R.L., 40026 Imola (BO) (IT)
(72) Inventor: BONZI, Giancarlo, 40026 Imola (BO) (IT)
(74) Representative: Karaghiosoff, Giorgio Alessandro

(57) **Abstract**

Radio-transmitting device (6) known as beacon using a Bluetooth® or Wi-Fi or similar protocol emitting with pre-determined periodicity data packets (77) and comprising a microprocessor (65), a transmitting section, a first antenna (67) and a second antenna (68) emitting too with pre-determined periodicity data packets (78); said first and second antennas having transmission main lobes oriented towards two distinct, different directions of space.
Method for localizing at least a person provided with a mobile device (24) provided with a software, said person being preferably indoors, the method making use of a plurality of such radio-transmitting devices (6).

## Description

The present invention relates to the technical field of geolocation through commercial devices known as beacons. In particular, the present invention relates to a beacon allowing a better localization of the persons thanks to the presence of a couple of antennas.

A beacon is a commercial electronic module. A Bluetooth® beacon transmits in a repetitive way, with a pre-determined periodicity, a radio signal according to the Bluetooth® standard at 2,4 GHz, containing in a codified way according to Bluetooth® standard a unique identifier, specific for each device. Analogously, a Wi-Fi beacon transmits in a repetitive way, with a pre-determined periodicity, a radio signal according to IEEE 802.11 standard, containing in a codified way according to IEEE 802.11 standard a univocal identifier for each device.

The use of beacons for localizing persons, both outdoors and indoors, is known. The present invention relates preferably to the localization of persons indoors, in places like wide point-of-sales and museums.

Placing a certain number of beacons indoors is known, with the aim of localizing a person carrying a portable device like a smartphone. The communication between beacons and portable device allows to detect the position of the person carrying the portable device, and even if said person is still or moving. Nowadays, this technology is not free from drawbacks.

The beacon transmits a spherical radio signal that propagates in every direction. With this kind of propagation, understanding in which precise point a person is with respect to the beacon is more difficult: e.g. to understand whether the person is just in front of the beacon, on its right or on its left.

It is worth noting that often beacons are fixed to the ceiling or to a wall, and this contributes to make difficult the precise localization of the person with respect to the beacon.

A first drawback of the known art is connected to the high number of beacons that have to be installed to reach a sufficient precision of localization of the person. The drawback is even stronger if we take into account that the operating system and the software working on a mobile device can answer with poor performances, when the mobile device is hit by an excess of signals coming from too many different beacon in a narrow time interval.

A second drawback is that said beacons flood the space with signals that propagate in every direction, stimulating uncontrolled, not foreseeable reflections that hit the different devices placed in a casual way.

A third drawback is the impossibility of univocally connecting the strength of the signal to the distance between portable device and beacon. In fact, there is a lack of standardization of the sundry portable devices carried by single persons. The type and manufacture year of the portable device (smartphone) heavily affect the capacity of signal reception by the portable device. Moreover, the position (near an ear, in a hand, inside a pocket, inside a bag) and the positioning (standing, laying, upward or downward display) of the smartphone have a heavy influence. A further complication is linked to the different release of the operating system, as typically portable devices can work with different releases of the operating system, according to the moment when they were sold. A further complication is the issue of different releases of the operating system or their updates, which causes the risk that a portable device, having a given behaviour, can modify its features due to an evolution or an update of the operating system itself. A further complication is linked to the fact that some portable devices vary their receiving capabilities when they are more or less loaded with computational activities. For instance, opening or closing external applications may influence the receiving capability of the portable device, and this capability can significantly vary in few seconds of time. This leads to signal having different intensities, from which understanding whether the signal variability is due indeed to a shift of the position or to a different inclination of the portable device, or to a different shielding due to the passage of other persons, or to reflection paths which trigger in the environment, or due to the features of reception typical for the device, or even other causes, becomes impossible.

A fourth drawback consists in the difficulty of understanding in which precise position the person is with respect to the beacon (just in front of it, to its right, to its left), and whether the person is still or is moving. If the person is moving, it is difficult to understand from which direction the person is approaching.

Using a plurality of beacons with the aim of improving the precision of the localization often leads to the first and second above-described drawbacks, and only with great difficulty a structured distribution of beacons can be reached.

All the above-described variables make the interaction between beacon and portable device inconsistent and uncontrollable.

Aim of the present invention is providing an apparatus and a method capable of performing a precise localization of a person, in the order of ≤3 metres, using single beacons or multiple beacons placed indoors in a structured way and overcoming the above described drawbacks of the known systems and methods.

This object is achieved by an apparatus and a method having the features of the independent claims. Advantageous embodiment and refinements are specified in the claims dependent thereon.

The aim is reached through a beacon having two, preferably equal, antennas, placed in the space in a slightly misaligned way. A further advantage of the beacon according to the present invention consists in transmitting signals different according to time, alternating high intensity signals with low intensity signals.
A first advantage of the present invention is increasing the precision of the localization of persons, in the presence of both a plurality of beacon placed in a structured way, and of a unique beacon (hotspot).
A second advantage is making a structured distribution of a plurality of beacons possible and effective.
A third advantage is making more effective the distribution of beacons in the presence of mobile devices in the hand of different persons, said devices having not known, non-controllable and not foreseeable reception features.
A fourth advantage is the reduction of costs, in that the beacon according to the present invention can work as two traditional beacons, with a negligible quantity of added hardware with respect to a traditional beacon.
A fifth advantage is that the beacon according to the present invention allows the precise detection of a carrier of a portable device being just in front of a beacon.
A sixth advantage is in the possibility of discriminating the direction of movement of a person, i.e. whether the person is approaching or leaving, and on which side the person is with respect to the beacon (right/left).

According to an embodiment of the invention, a method is provided for localizing at least a person provided with a mobile device running a software, said person being preferably indoors, the method making use of a plurality of radio-transmitting devices and comprising the following steps:
- Transmission of a sequence of data packets, which sequence is formed by data packets transmitted alternatively and in succession to each other by the first and second antenna of at least a radio-transmitting device called beacon;
- Reception of said sequence of data packets by at least one of mobile devices;
- Determination of the relative position of said at least one mobile device with respect to said radio-transmitting device based on the parameter of signal intensity reception of the data packet transmitted by one of the two said antennas and data packets transmitted by the other antenna, the distance being defined on the basis of the intensity of said two signals and the direction, or the polar coordinates, of the position of the mobile device according to the difference of intensity values of the reception signal relative to the data packets transmitted by the first antenna with respect to those transmitted by the second antenna.

According to a further embodiment, the method provides also steps for determining the direction of motion of the person carrying a mobile device. In this embodiment the transmission of the data packet of signal transmitted by the first antenna and of the data packet transmitted by the second antenna occurs at different, consecutive times, tn-1, tn, tn+1. The fact that a person is approaching or leaving with respect to a given radio-transmitting device is detected by comparing at least a value of the Received Signal Strength Indication (RSSI) at a first time with a value of the Received Signal Strength Indication received at a second time of two data packets sent one after the other by the radio-transmitting device.

The process may be repeated one or more time so that the person associated with a mobile device is can be tracked for example as long as it remains within a certain distance from the radio-transmitting device.

According to a further embodiment in order to be able to determine the time instant at which an event, particularly a receipt event has occurred and to associate the receipt event to a transmission event, each transmission event may be associated with a time stamp. Alternatively the transmission events are repeated with a certain frequency which is either public or which is coded in the transmitted signals.

According to still another embodiment, the signals transmitted by the radio-transmitting device are modulated by varying in time the transmission signal strength index, this means by setting the strength of the transmission signal, for example the intensity of the transmitted signal at one of at least two alternative levels. The strength of the signal can be alternated between the two levels according to a certain sequence.

As it will appear more clearly from the following description, the transmission signal strength or intensity or other parameter characterising the transmission signal is modulated or modified by driving accordingly a transmission signal generator. This transmission signal generator and the driving signal of this generator may be in the form of hardware units or in the form of a hardware/software unit for example in the form of a software executed by a microprocessor and configuring the microprocessor for carrying out the functions of a transmission signal generator and of a driving signal generator of the transmission signal generator. The units for driving the repeated transmission of signals according to a certain repetition frequency and the units of coding by modulation on the transmission signal the information about the repetition frequency or the time stamp indicating the instant at which transmission of the signal has occurred may be in the form of hardware components or in the form of hardware/software units When these units are in the form of a combination of software executed by hardware. These units may comprise a microprocessor and one or more peripheral controlled by the microprocessor and the microprocessor is configured to carry out the above functions by executing the software in which the instructions for configuring the microprocessor are coded.

In relation to the embodiments providing information about the direction of motion of a person or using a modulation between two values of the transmission signal strength or intensity in order to refine the position precision, it has to be noticed that the radio-transmitting device need to carry out very simple functions so that conventional beacon hardware may be programmed in order to carry out the above disclosed functions. The main computational burden is given to the portable device, which for example can be in the form of a smartphone or a tablet or a handheld or pocket computer. These devices have normally a powerful hardware, which can easily support computation of data in real time.

It is also to be noticed that by transferring every computational task to the mobile devices, even if there are more persons receiving the signals transmitted by the radio-transmitting device, the system will not be overloaded, since every mobile device will carry independently the data processing required for determining the position and also particular tasks as tracking the direction. These results are transferred to the internal app of each mobile device and used as input data for locally executed functions or it may be transferred by the mobile device through a wireless network to a remote server or to a cloud server for executing any kind of service which is based on data about the position of the person carrying the mobile device.

Also in this case there is no need for creating a network infrastructure since for example using smartphones as a mobile device the network is already existent. The radiofrequency transmitting device remains unchanged in its architecture and complexity.

Further advantages and properties of the present invention are disclosed in the following description, in which exemplary embodiments of the present invention are explained in detail based on the drawings:
- Figure 1: Top view of a typical interaction between a traditional beacon and a person carrying a portable device;
- Figure 2: Top view of the interaction between a directional beacon according to the present invention and a portable device;
- Figure 3: Schematic representation of the interaction between a directional beacon according to the present invention and a portable device, according to a particular modality.
- Figure 4: Figure 4 is a schematic representation of the detecting the direction of motion of a user with a mobile device receiving the signal forma beacon and in which only the signal of the left antenna 67 is illustrated for sake of simplicity.

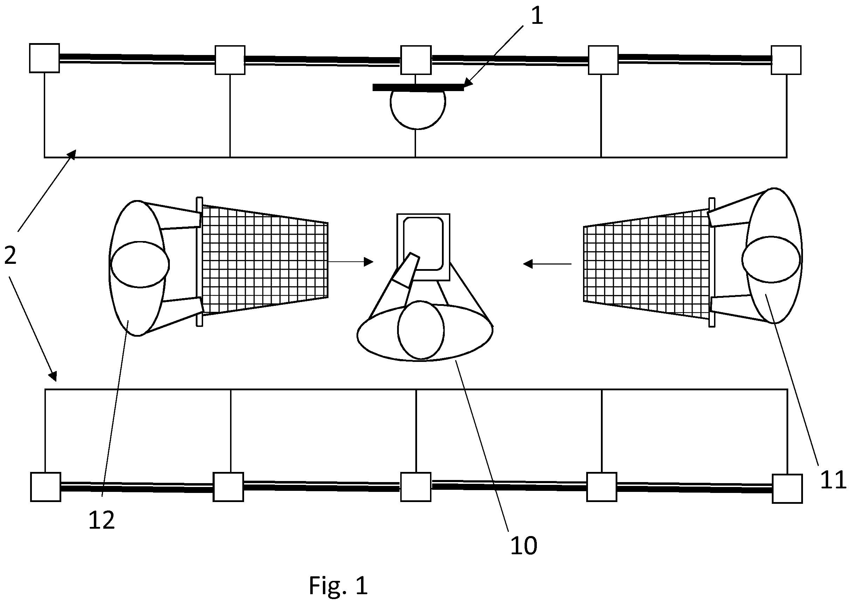

Figure 1 shows a typical case of an interaction between a traditional beacon and a person inside a point-of-sale. In particular, Figure 1 shows a typical point-of-sale aisle delimited by two shelving 2. The traditional beacon is fixed to one of them. For the above-explained reasons, the traditional beacon cannot discriminate whether the person 10 is just in front of the beacon itself, or whether the person is approaching from its left 11 or its right 12.

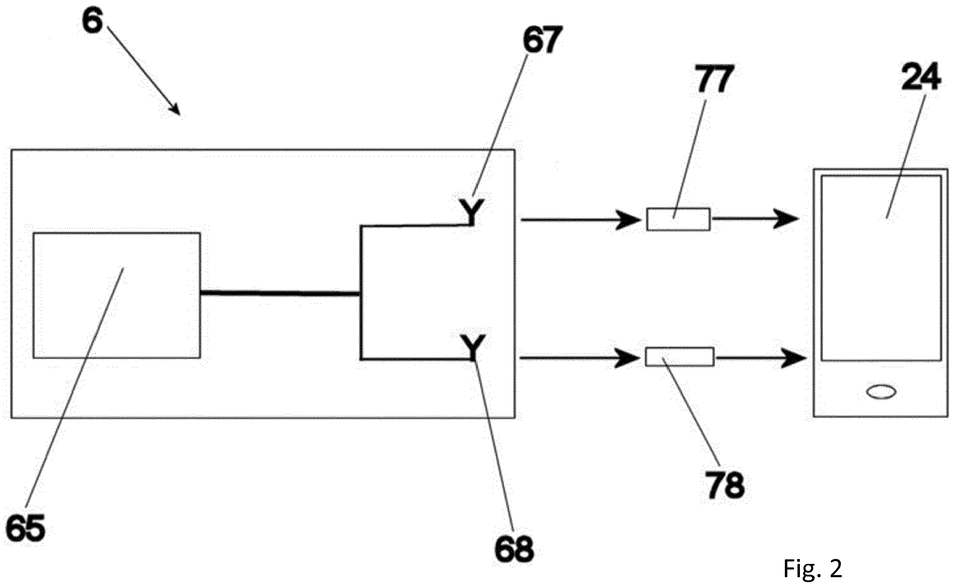

Figure 2 shows a directional beacon 6 according to the present invention, which comprises a microprocessor 65, a first transmitting antenna 67, and a second transmitting antenna 68. Preferably, the two antennas 67, 68 are symmetrical and equal to each other, but directed towards two distinct directions of space, preferably opposed to each other.

In another not shown embodiment, the first and the second antenna are physically oriented in the same direction, e.g. at 90° with respect to the electronic board on which they are realized, but have antenna main lobes oriented to different, i.e. divergent, directions.

Said antennas 67, 68 emit each one signal under the form of data packet 77, 78, respectively, towards a portable device (smartphone) on which a specific program 25 is loaded (app).

Data packets 77, 78 are transmitted at the same time, but with a small time lag, in the order of hundreds of milliseconds. Such a small time interval in the transmission of data packets 77, 78 allows to be reasonably sure that in that time interval neither the portable device significantly changes its positioning nor the person carrying it appreciably changes her/his position in space.

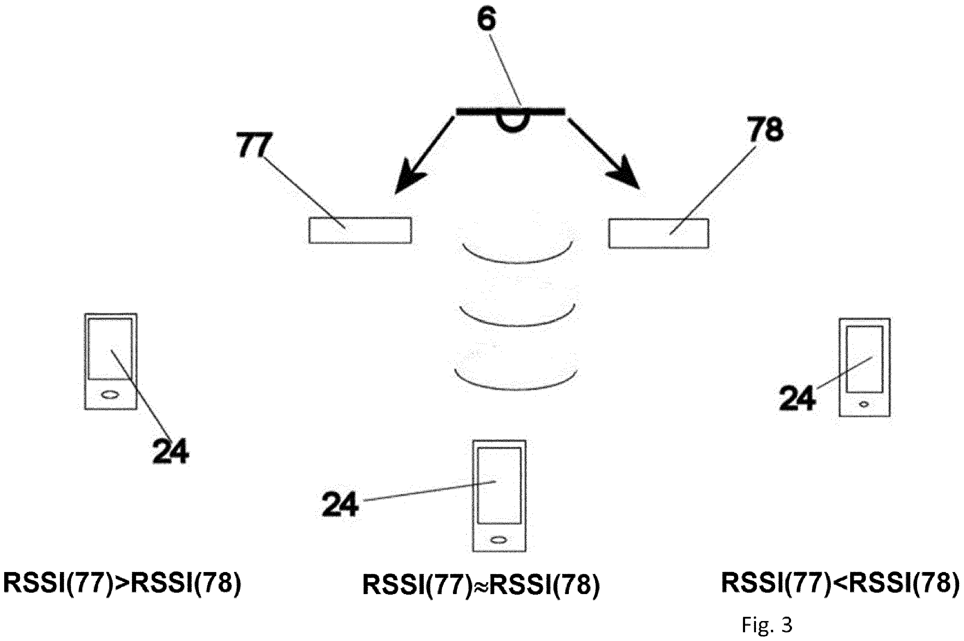

Figure 3 shows the differences among three different positions of person 10 carrying the portable device 24 with respect to the beacon 6 according to the present invention, along an arc of a circle, wherein the centre substantially coincides with the beacon itself.

For each data packet received by the portable device, the device itself gets an in indication of the power with which this packet was received (Received Signal Strength Indication, RSSI). The parameter RSSI or one of its elaborations is often the first indicator allowing to estimate the distance between a mobile device and the given beacon which transmitted that packet.

The portable device 24, through its app 25, examines the level of the signal of data packet 77, for the sake of brevity indicated as RSSI(77) received by the antenna 67 and, in sequence, the signal of data packet 78, indicated as RSSI(78) received by the antenna 68. Thanks to the presence of the two antennas and to the query mode, triangulation measures can be performed.

In particular, with reference to the examples specifically indicated in Figure 3, representing three typical cases, the following information can be obtained:
- If RSSI(77) ≈ RSSI(78), the person is near the beacon 6 and is in front of it;
- If RSSI(77) >> RSSI(78), the person is on the same side of the antenna 77 of the beacon 6;
- If RSSI(77) << RSSI(78), the person is on the same side of the antenna 78 of the beacon 6.

Without loss of generality, RSSI(77) and RSSI(78) can mean the signal effectively received in that data packet, or one of its elaboration and/or filtration which can statistically clean the signal, possibly averaging with the previously received signals.

The app 25 operating on the mobile device 24 can extract other useful information for the position, comparing the evolution of the signals received over time. E.g. comparing the level of the signal emitted by the antenna 67 at time tₙ, with that emitted at the previous moment tₙ₋₁, it is possible to understand whether the person 10 carrying the portable device 24 is approaching or leaving. As a way of example, comparing RSSI(77tₙ) with RSSI(77tₙ₋₁), one can understand whether the person 10 provided with portable device 24 is approaching or leaving.

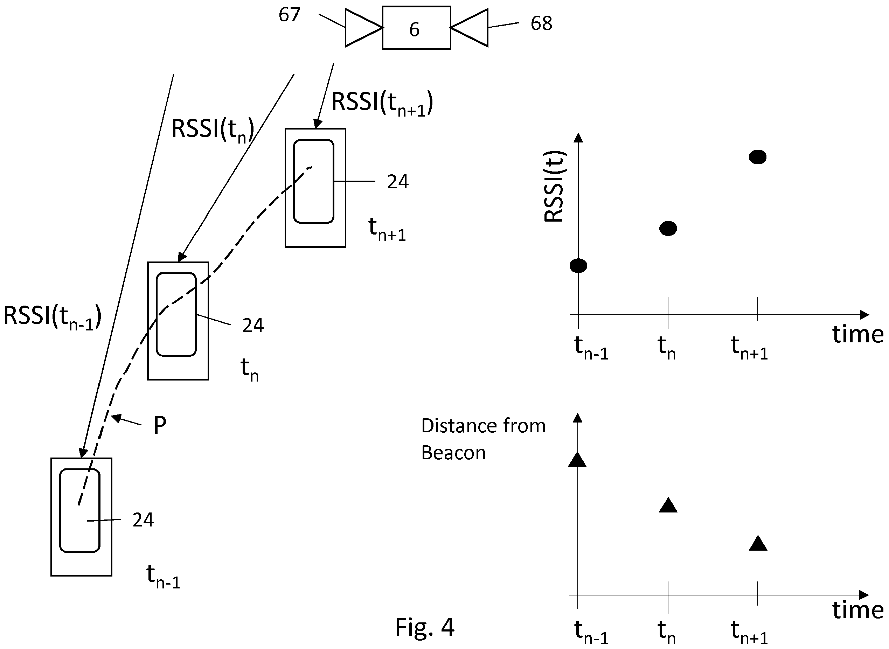

An example representing the above method steps is illustrated in figure 4. In this case the beacon 6 is illustrated with the two antennas 67, 68. In order to keep the figure easily understandable the transmission of the antenna 68 has been omitted but it is considered to be present as described in the above examples. The mobile device 24, which can be any of the different devices already indicated in the previous description, moves in the direction of the radio transmitting device 6 along the path P. The mobile device is shown at the position on the path P at the times tₙ₋₁, tₙ, tₙ₊₁.

At each position a receive signal having a certain receive signal strength is acquired by the mobile device following a transmission of a transmission signal through the antennas 67, 68 by the beacon 6.

The mobile device using the different received signals strength such as signal intensity or power determines the position of the mobile device at each time instants tₙ₋₁, tₙ, tₙ₊₁ using distance data from the beacon 6 and the known position coordinates of the beacon 6 itself. The graphic representation on the left shows the RSSI at the different times and the corresponding distances from the beacon.

This kind of direction tracking may also allow to calibrate the mobile device on the intensity of the transmitted signals, for example by rescaling the distances of the mobile device computed using as a reference one of the computed distances at a certain time. Since, when considering the transmitted signals strength, a constant, the intensity or strength of the received signals is a function of the said constant, computing ratio of two received signals at two different times will cancel the transmission signal contribution and the relative position indication will be free from calibration problems.

The transmitted signals may comprise data packets in which several information is coded by modulation such as one or more of the following information: data relating for example to the position of the beacon and/or to information relating to transmission power setting, information about the repetition frequency of the signal transmission and/or information about the transmission instant of a signal.

This embodiment may be provided in combination with the features of each one of the embodiments described above.

Relating to the units needed to carry out the method described above one preferred embodiment provides a hardware/software architecture in which a processor to which different peripherals are connected executes a program in which instructions are coded for the microprocessor to drive the peripherals and to execute the functions needed to carry out the steps of the above method.

In the example of the figures, the beacon 6 is provided with a microprocessor with peripherals such as a memory, a TX/RX unit, a power supply, and the program for configuring the microprocessor to operate as a unit carrying out the functions described above is executable by the microprocessor 65 and is stored in a memory. The mobile device typically comprises already a built in processor and peripherals, which execute software in which the instructions are coded for the mobile device to carry out the functions required, so that the functions for computing the time dependent position of the mobile device on certain path may be in the form of an app.

In a particularly advantageous further embodiment, the level of power with which data packets are transmitted by the antennas 67, 68 can be set. In fact, antennas 67, 68 can transmit data packet with a transmission signal having a high value (TSSI_{H}) or a low value (TSSI_{L}).

Further improvements in the evaluation of the position according to the power level of the signal received can be obtained when the advertising packet transmitted by antennas 67, 68 has also TSSI or one of its parameters as payload:
- Transmitting data packet 77, with a high level of transmission, equal to TSSI_{H}, RSSI(77) and RSSI(78) are the level of signal of the packets received by the portable device 24;
- Transmitting data packet 87, 88 with a low level of transmission, equal to TSSI_{L}, RSSI(87) and RSSI(88) are the level of signal of the packets received by the portable device 24.

When the person is in front of the beacon, independently from the fact that she/he is on the side of the wall carrying the beacon, or near to the wall in front of the beacon, RSSI(77) ≈ RSSI(78) and RSSI(78) ≈ RSSI (88).

After some passage in the aisle, while passing right in front of the beacon, statistically the person will happen to pass sometimes near the wall carrying the beacon, and sometimes near the wall in front of the beacon. In the case of a supermarket, as supermarket aisles typically have a width of about two metres, when the person 10 passes in front of the beacon 6, a correlation can be estimated between the power level transmitted by the beacon and the received RSSI, with a precision better than 2 metres. It is worth noting that the power level received by the portable device 24 is referred precisely to that mobile device having that specific antenna model, that specific version of the operating system, and the updates to the operating system working in that moment. Then, crossing the levels of RSSI(77), RSSI(78), RSSI(87), RSSI(88) with the respective levels of transmitted signal TSSI, the app 25 can estimate the receiving capacity of the mobile device 24. Based on the receiving capacity, the app can estimate with increasing precision the distances of the mobile device 24 from the beacon 6, evaluating the levels of received RSSI. In this way, the level of RSSI received by mobile device 24 becomes representative of the distance of the beacon from that specific mobile device.

Exploiting the non-linearity in reception, and considering the data packet transmitted with a very low TSSI_{L} the difference between RSSI(87), RSSI(88) is negligible, independently form the position in the aisle.

Instead, considering the data packets transmitted with a very high power level of TSSI_{H}, the difference between RSSI(77) and RSSI(78) is very variable according to the fact that the person 10 is near of far from the beacon. These empirical considerations allow to improve the estimate of the position of the mobile device with respect to the beacon, examining the received RSSI coupled with the TSSI levels of the packet transmitted by the beacon, without an a priori calibration of the receiving capacity of that specific mobile device 24, with its specific features of kind device, productive batch, type of antenna, operating system version and its updates.

Given the non-linearity of the antenna systems, with TSSI_{L} the levels of the signals received from the two antennas and indicated with RSSI(87) and RSSI(88) are very similar if the person 10 is right in front of the beacon 6, near the wall carrying the beacon, or far from the beacon wall. When the transmission level is TSSI_{H}, the differences between the signals received from the two antennas RSSI(77) and RSSI(78) are much more marked according to the fact that the person is in front of the beacon, near the wall in front of the beacon or near the wall far from the beacon. Considering several passages of the mobile device 24 in front of the beacon 6, a heuristic can be improved that allows to estimate the distances according to received RSSI level, also taking into account the power levels with which the packets are transmitted.

Said heuristic can be non-linear algorithms of predictive type, like classification algorithms or predictive algorithms based on continuous training on received data and on result performances, like e.g. neural networks or other algorithms. These are implemented in the code of app 25 performed by the mobile device 24 associated with single human carriers 10.

The features of this further embodiment may be provided in combination of the features of each one of the embodiments described above.

The hardware for carrying out the transmission signal strength variation between the two different levels and for evaluating the corresponding received signals may be also in this case in the form of an electronic circuit or as a combination of hardware and software. The hardware being in the form of one or more processors and one or more peripherals communicating with the one or more processors and the processor or the processors executing a software in which the instructions are coded for configuring the processor to carry out the above disclosed functions.
1 radio-transmitting device (beacon)
2 point-of sale shelving
6 radio-transmitting device according to the present invention
10 person
11 person approaching from the left
12 person approaching from the right
24 portable device (smartphone)
25 software loaded on the portable device (app)
65 microprocessor
67 first antenna
68 second antenna
77 first data packet transmitted by the first antenna
78 second data packet transmitted by the second antenna
87 first data packet transmitted by the first antenna at a low level
88 second data packet transmitted by the second antenna at a low level

## Claims

1. Radio-transmitting device (6) known as beacon using a Bluetooth® or Wi-Fi or similar protocol emitting with pre-determined periodicity data packets (77) and comprising a microprocessor (65), a transmitting section and a first antenna (67), **characterized in that**
it further comprises a second antenna (68) emitting too with pre-determined periodicity data packets (78); said first and second antennas having transmission main lobes oriented towards two distinct, different directions of space.

2. Radio-transmitting device (6) according to claim 1, wherein said antennas (67, 68) are equal to each other and symmetrical with respect to a pre-set reference point of the position of the beacon in space.

3. Radio-transmitting device (6) according to claim 1, wherein said antennas (67, 68) are different from each other

4. Radio-transmitting device (6) according to one or more of the preceding claims, in combination with one or more mobile devices (24) provided with a transmitter/receiver working according to one of Bluetooth®, o Wi-Fi or similar protocol, provided with a processing unit and at least a memory for an application (app) for processing one or more data packets (77, 78) of signals transmitted by the device (6) itself, which is performed by the processing unit of one or more of said mobile device (24), which mobile devices receive signals transmitted by device (6), said app determining status values of said mobile devices (24) according to parameters of the received signals (77, 78), in particular said status values being the position in space of said mobile devices with respect to the position of said device (6) itself.

5. Radio-transmitting device (6) according to one or more of the preceding claims comprising a modulator of at least a parameter of the transmitted signal from the two antennas (67, 68) between at least two different values of the said at least one parameter, and the mobile device comprising a processing unit configured to process the received signals and determine the position of the portable device in relation to the radio transmitting device as a function of the receive signal strength index of the received signals corresponding to each of the transmitted signals with the two different values of the said at least one parameter.

6. Radio-transmitting device according to one or more of the preceding claims in combination with at least one mobile device (24), the said radio-transmitting device, transmitting a transmit signal data packet (87, 88) through the two antennas (67, 68) according to a predefined transmission repetition cycle and the at least one portable device (24) comprising a processor configured to process the transmitted signals received according to a reception repetition cycle, each received signal being associated at least to a time instant of reception and the processor determining tracking at least the direction of movement of the mobile device (24) relatively to the radio-transmitting device as a function of the signal strength of each received signal at a certain receive instant, for example by determining the relation between the time at which the signals has been received and the corresponding receive signals strength indication.

7. Method for localizing at least a person (10) provided with a mobile device (24) provided with a software (25), said person being preferably indoors, the method making use of a plurality of radio-transmitting devices (6) according to claims 1-4 **characterized by the following steps:**
i. Transmission of a sequence of data packets (77, 78), which sequence is formed by data packets transmitted alternatively and in succession to each other by the first (67) and second antenna (68) of at least a radio-transmitting device (6) called beacon;
ii. Reception of said sequence of data packets (77, 78) by at least one of mobile devices (24);
iii. Determination of the relative position of said at least one mobile device (24) with respect to said radio-transmitting device (6) based on the parameter of signal intensity reception of the data packet transmitted by one of the two said antennas (67) and data packets transmitted by the other antenna (68), the distance being defined on the basis of the intensity of said two signals (77, 78) and the direction, or the polar coordinates, of the position of the mobile device (24) according to the difference of intensity values of the reception signal relative to the data packets transmitted by the first antenna (67) with respect to those transmitted by the second antenna (68).

8. Method for localizing at least a person (10) provided with a mobile device (24) according to claim 7, wherein the data packets (77, 78) of the sequence of data packets are transmitted at time intervals in a range between 0,001 and about 10 seconds.

9. Method for localizing at least a person (10) provided with a mobile device (24) according to claim 7 or 8, wherein the mobile device (24) through its software (25), once received data packet (77) examines signals RSSI(77) received from said first antenna (67) and then signals RSSI(78) received by said second antenna (68) and based on the comparison of said signals determines the following relative position of the mobile device (24) with respect to the radio-transmitting device (6);
- If RSSI(77) ≈ RSSI(78), the person (10) or her/his mobile device (24) is just in front of radio-transmitting device (6);
- If RSSI(77) >> RSSI(78), the person (10) or her/his mobile device (24) is laterally placed with respect to the radio-transmitting device (6), on the same side of the first antenna (67);
- If RSSI(77) << RSSI(78), the person (10) or her/his mobile device (24) is laterally placed with respect to the radio-transmitting device (6), on the same side of the second antenna (68).

10. Method for localizing at least a person (10) provided with a mobile device (24) according to one or more of claim 7 -9, wherein the transmission of the data packet of signal (77) transmitted by the first antenna (67) and of the data packet (78) transmitted by the second antenna (68) occurs in consecutive times, tn-1, tn, tn+1 ...; comparing at least a value RSSI(77tn) with a value RSSI(77tn-1) of two consecutive data packets, the fact that a person (10) is approaching or leaving with respect to a given radio-transmitting device (6) can be detected.

11. Method according to claim 10 in which the transmission of the data packet by the two antennas (67, 68) is executed according to a predefined time sequence and the direction of the mobile device (24) is calculated by the mobile device (24) as a function of the variation of the strength or intensities of the received signals by the mobile device (24) at least at two different times.

12. Method for localizing at least a person (10) provided with a mobile device (24) according to one or more of claims 7 to 11, wherein further improvements to the position estimates according to the power level of the received signal are obtained when the data packet transmitted by antennas (67, 68) has also TSSI or one of its parameters as payload.

13. Method for localizing at least a person (10) provided with a mobile device (24) according to one or more of claims 7 to 12, wherein further improvements to the position estimate are obtained setting the power level with which data packets are transmitted by antennas (67, 68) on at least two different levels for consecutive data packets of the sequence of data packets, generating a sequence of data packets having a high value (TSSI_{H}) or low value (TSSI_{L}) transmission signal, according to a pre-set distribution of the different transmission powers on the data packet sequence.

14. Method according to one or more of the preceding claims 7 to 13 in which each mobile device computes the position from the received signals strength and optionally the direction of motion the data being processed by a heuristic or predictive or a classification algorithm and optionally the data being stored in a training dataset of the said algorithm.

15. Method according to one or more of the preceding claims in which a plurality of mobile devices receives at the same time transmission signals from radio frequency transmitting unit each mobile device processing independently the received signals for determining its position and/or direction of motion and automatically transmits the said data to a cloud server.
